**Europäisches Patentamt**

**European Patent Office**

**Office européen des brevets**

(19)

(11) Veröffentlichungsnummer: **0 174 500**
**B1**

(12) # EUROPÄISCHE PATENTSCHRIFT

(45) Veröffentlichungstag der Patentschrift:
**13.07.88**

(51) Int. Cl.⁴: **E 04 B 2/74**, H 02 G 3/28

(21) Anmeldenummer: **85109953.1**

(22) Anmeldetag: **07.08.85**

(54) **Mobile Wandung.**

(30) Priorität: **11.08.84 DE 3429640**

(43) Veröffentlichungstag der Anmeldung:
**19.03.86 Patentblatt 86/12**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**DE - A - 2 748 397
FR - A - 2 457 026
US - A - 3 836 936
US - A - 3 919 457
US - A - 4 375 010**

**TECHNIQUES & ARCHITECTURE, Nr. 337, September
1981, Seiten 66-69, Paris, FR; A. STANTON: "Le bureau
du futur"**

(73) Patentinhaber: **Uwe Dorn GmbH, Birkenallee 49,
D-4930 Detmold 17 (DE)**
Patentinhaber: **Firma August Meyer, Bundesstrasse 36,
D-4926 Dörentrup 3 (DE)**
Patentinhaber: **PRECISION Mfg. Inc. DEUTSCHLAND
GmbH, Esbacherweg 5, D-8805 Feuchtwangen (DE)**
Patentinhaber: **Designberatung Herta Piorek, Biebricher
Allee 25, D-6200 Wiesbaden (DE)**

(72) Erfinder: **Dorn, Uwe, Birkenallee 49,
D-4930 Detmold 17 (DE)**

(74) Vertreter: **Hanewinkel, Lorenz, Dipl.-Phys., Patentanwalt
Ferrariweg 17a, D-4790 Paderborn (DE)**

# Beschreibung

Die Erfindung bezieht sich auf eine mobile Wandung in Form einer Trennwand, eines Trennwandelementes, einer Tisch- bzw. Arbeitsplatte, eines Gestelles, wie Tischgestelles od. dgl., für Büro-, Wohn- oder Werkstatträume.

Um in Büros, insbesondere in Grossraumbüros, an den Trennwänden und Schreibtischen viele elektrische Anschlussmöglichkeiten für Leuchten, Schreibmaschinen, Computer und andere elektrische Geräte sowie Telefon- und Fernsprecheinrichtungen zu haben, ist es bekannt geworden, an den Trennwänden und den Schreibtischen Kabelkanäle anzuordnen, in denen die Verkabelung erfolgt und in die dann auch Steckdosen und dergleichen eingesetzt sind. (Siehe z. B. DE-A-2748397)

Diese Verkabelung mittels Kabelkanälen ist einerseits verhältnismässig teuer und ermöglicht andererseits nur in einem begrenzten Bereich eine variable Stromabnahme, was sich insbesondere bei Umstellungen der Trennwände und Schreibtische nachteilig auswirkt.

Es ist deshalb Aufgabe der Erfindung, eine mobile Wandung mit elektrischer Stromversorgung (Stromabnahme) zu schaffen, die eine grosse Variationsmöglichkeit zum Zusammenstellen von Trennwänden und Schreib- sowie Arbeitsplatten in Büro-, Werkstatt- und Wohnräumen ermöglicht und dabei unter Vermeidung von Verkabelungen einen Stromanschluss und eine Stromabnahme an beliebigen Stellen gestattet sowie auch eine variable Umstellung der Wandungen zueinander ermöglicht.

Diese Aufgabe wird erfindungsgemäss dadurch gelöst, dass in die Wandung an mindestens einer Kante und/oder Fläche eine berührungssichere Stromverteilerschiene für den Anschluss von Stromabnehmern (Adaptern) integriert ist.

In bevorzugter Weise ist an mehreren Kanten und/oder einer oder beiden Flächen der Wandung eine Anordnung von Stromverteilerschienen vorgesehen, welche durch lösbare Abdeckungen berührungsgeschützt ausgebildet sind, wobei diese Abdeckungen für den Anschluss eines Adapters an jeder gewünschten Stelle entfernt und anschliessend wieder festgelegt werden können.

Weitere Merkmale der Erfindung sind aus den anderen Unteransprüchen zu entnehmen.

Die erfindungsgemässe mobile Wandung ist in vorteilhafter Weise mit mindestens einer, vorzugsweise mit mehreren integrierten Stromverteilerschienen ausgestattet, so dass an jeder beliebigen Stelle dieser Stromverteilerschienen eine Stromabnahme erfolgen kann; eine elektrische Verkabelung und somit die herkömmlichen Kabelkanäle entfallen. Durch die integrierten Stromverteilerschienen ist die erfindungsgemässe Wandung gegenüber herkömmlichen Wand- und Tischelementen mit elektrischer Verkabelung wesentlich kostengünstiger ausgeführt.

Weiterhin gestattet die mobile Wandung eine grosse Variationsmöglichkeit im Zusammenstellen von Trennwänden und Schreib- bzw. Arbeitsplatten. Die einzelnen Wandungen werden durch elektrische Steckverbinder im Bereich ihrer Stromschienen miteinander verbunden, und für eine zusammengestellte Einheit wird praktisch nur ein Netzanschluss ermöglicht.

Durch diese kabellose Verbindung der Wandungen untereinander sind diese jederzeit in ihrer Variation veränderbar, und es werden keine aufwendigen elektrischen Montagearbeiten (Umlegen von elektrischen Kabeln) erforderlich.

Das Einsatzgebiet dieser mobilen Wandung ist sehr gross, und durch die Einfachheit der Wandung, ihrer elektrischen Sicherheit und ihrer grossen Variation in den Abnahmestellen hat diese mobile Wandung einen hohen Gebrauchswert erhalten.

Die Wandung kann als/für Regale, Schränke, Stellwände, Raumteiler und alle versetzbaren Elemente eingesetzt bzw. ausgeführt werden.

Anhand der Zeichnungen werden nachfolgend Ausführungsbeispiele gemäss der Erfindung näher erläutert. Es zeigt:

Fig. 1 eine perspektivische Ansicht zweier durch Trennwände gegeneinander abgeteilter Arbeitsplätze mit in die Trennwände integrierten Stromverteilerschienen,

Fig. 2 eine perspektivische Ansicht einer als Trennwand oder Tischplatte benutzbaren Wandung mit kantenseitig eingelassenen Stromverteilerschienen,

Fig. 3 eine Draufsicht auf eine Wandung mit kantenseitigen und flächenseitiger Stromverteilerschiene,

Fig. 4 eine Stirnansicht einer Trennwand oder Tischplatte mit kantenseitig und flächenseitig eingelassener Stromverteilerschiene,

Fig. 5 eine Stirnansicht einer Wandung mit auf einer Kante festgelegten und in eine Ecke eingelassenen Stromverteilerschienen mit Abdeckungen,

Fig. 6 eine Vorderansicht zweier aneinandergereihter Wandelelemente mit Stromverteilerschienen und an einer Trennwand vorgesehenen Stromeinspeisung und an der anderen Trennwand angeordnetem Stromverbinder.

Mit 1 ist eine mobile Wandung bezeichnet, die als Tisch- bzw. Arbeisplatte für Schreibtische, Zeichentische, Werktische od. dgl. und als Trennwand oder ein Trennwandelement zur Aufteilung von Arbeitsplätzen in Büros, in Wohnungen od. dgl. eingesetzt wird.

In diese bewegliche Wandung 1 ist an mindestens einer Kante 1a und/oder Fläche 1b eine Stromverteilerschiene 2 integriert, die berührungssicher ausgeführt und an jeder ihrer Stelle durch einen Stromabnehmer 3 für die Stromabnahme zugänglich ist.

Die Stromverteilerschiene 2 und der Stromabnehmer 3 (Adapter) sind in bekannter Weise ausgeführt. (Siehe z. B. US-A-3919457)

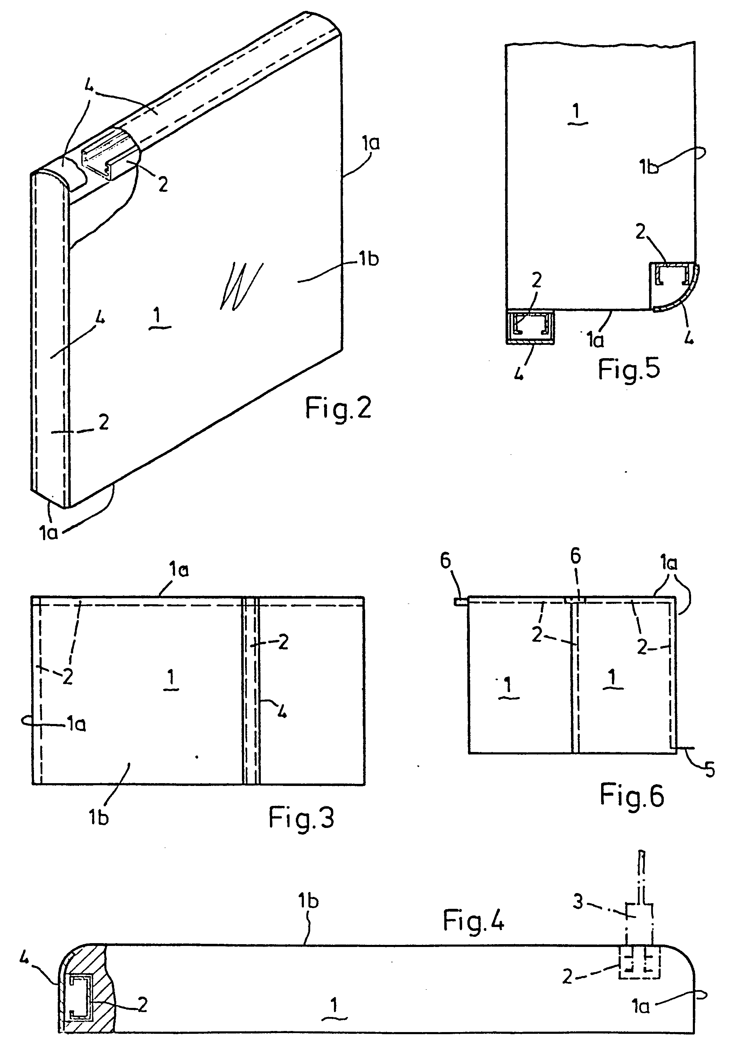

Gemäss der Ausführung nach Fig. 2 ist die bewegliche Wandung 1, welche als Element für eine Trennwand oder als Tischplatte benutzt werden kann, an zwei ihrer Kanten mit eingelassenen Stromverteilerschienen 2 ausgestattet. Diese Wandung 1 kann aber auch umlaufend in ihrer Kante Stromverteilerschienen 2 aufweisen. Diese eingelassenen und in der Wandung 1 durch geeignete Mittel, wie in Aufnahmeprofilen innerhalb der Wandung 1 eingesteckt und/oder eingerastet oder durch Schrauben in den Aufnahmeprofilen oder in der Wandung 1 direkt gehaltenen Stromverteilerschienen 2 schliessen aussenseitig bündig mit der Wandungskante ab oder sind gegenüber dieser zurückversetzt vorgesehen. Die von aussen her zugängliche offene Seite (Zugangsseite) der Stromverteilerschienen 2 ist durch eine Abdeckung 4, wie Steck-, Schiebe- oder Rastleiste, Profilschiene od. dgl., vorzugsweise aus Kunststoff, geschlossen, so dass dadurch die Zugangsseite der Stromverteilerschienen 2 elektrisch berührungsgeschützt ist. Diese Abdeckung 4 lässt sich an der Wandung 1 oder an in der Wandung 1 vorgesehenen geeigneten Mitteln lösbar festlegen.

Ist kein Stromabnehmer 3 an die Stromverteilerschiene 2 angeschlossen, so ist diese auf ihrer gesamten Länge durch die Abdeckung 4 verschlossen und bildet mit der Wandung 1 eine geschlossene Einheit. Soll nun an irgendeiner oder an einer bestimmten Stelle Strom abgenommen werden, so wird die Abdeckung 4 entfernt und der Stromabnehmer 3 in die Stromverteilerschiene 2 eingesetzt und dabei mechanich und elektrisch mit der Stromverteilerschiene 2 verbunden (verriegelt).

Die Zugangsseite der Stromverteilerschiene 2 wird dann bis auf den Bereich des Stromabnehmers 3 wieder durch eine Abdeckung 4 verschlossen, indem aus der Abdeckung 4 der Teil für den Stromabnehmer 3 herausgetrennt oder aber eine oder mehrere entsprechend kürzere Abdeckungen 4 eingesetzt werden, so dass die Zugangsseite der Stromverteilerschiene 2 durch ihn selbst und die sich daran anschliessende Abdeckung 4 gegen Berührung wieder verschlossen ist.

Fig. 3 zeigt beispielsweise eine Wandung 1, die als Tischplatte oder als Trennwand einsetzbar ist und die an zwei winklig zueinander verlaufenden Kanten 1a je eine Stromverteilerschiene 2 und in einer Fläche 1b, vorzugsweise der Arbeits- oder Sichtfläche, eine eingelassene Stromverteilerschiene 2 aufweist.

Gemäss Fig. 4 ist die Wandung 1 ebenfalls mit einer in eine Kante 1a eingelassene und durch eine abnehmbare Abdeckung 4 überdeckte Stromverteilerschiene 2 und mit einer von einer Fläche her in die Wandung 1 eingesetzte Stromverteilerschiene 2 ausgestattet, wobei hierbei diese flächenseitige Stromverteilerschiene 2 näher zur Kante angeordnet ist, als die Stromverteilerschiene 2 in Fig. 3.

Die mit geringem Abstand zur Kante 1a der Wandung 1 in die Fläche 1b eingesetzte Stromverteilerschiene 2 kann auch umlaufend in der Wandung 1 vorgesehen werden, wobei dann die Wandung 1 nur mit dieser umlaufenden flächenseitigen Stromverteilerschiene 2 ausgestattet ist oder aber noch zusätzlich an mindestens einer Kante 1a die eingelassene Stromverteilerschiene 2 aufweist.

In Fig. 4 ist auch in strich-punktierten Linien der mit der Stromverteilerschiene 2 verbundene Stromabnehmer 3 gezeigt.

Fig. 5 zeigt eine weitere Ausführung einer Wandung 1, bei der auf der Kante 1a der Wandung 1 eine Stromverteilerschiene 2 festgelegt und durch eine Abdeckung 4, die mindestens die Zugangsseite oder aber die gesamte Stromverteilerschiene 2 überdeckt, berührungssicher ausgebildet ist; weiterhin zeigt diese Wandung 1 im Eckbereich zwischen Kante 1a und Fläche 1b eine eingelassene und ebenfalls durch eine Abdeckung 4 überdeckte Stromverteilerschiene 2.

In Fig. 6 sind zwei nebeneinander angeordnete und miteinander verbundene Trennwände 1 dargestellt, wobei diese ebenfalls die integrierten Stromverteilerschienen 2 aufweisen und wobei eine Trennwand 2 mit einer Stromeinspeisung (Verbindung bzw. Anschlusteil zum Netz) 5 versehen und die andere Trennwand 1 mit einem Stromverbinder, vorzugsweise Steckverbinder 6, ausgestattet ist.

Die Trennwände 1, welche jeweils Elemente für unterschiedlich gross zusammenstellbare Trennwände bilden, werden untereinander durch Längs-, Eck-, T- oder andersartige Steckverbinder 6 elektrisch miteinander verbunden. Das gleiche gilt auch für die elektrische Verbindung zwischen den Stromschienen 2 von Tischplatten 1 mit Trennwänden 1.

Die Stromverteilerschienen 2 erstrecken sich in bevorzugter Weise jeweils über die gesamte Länge der Kante 1a oder über die gesamte Breite bzw. Länge der Fläche 1b der Wandung 1.

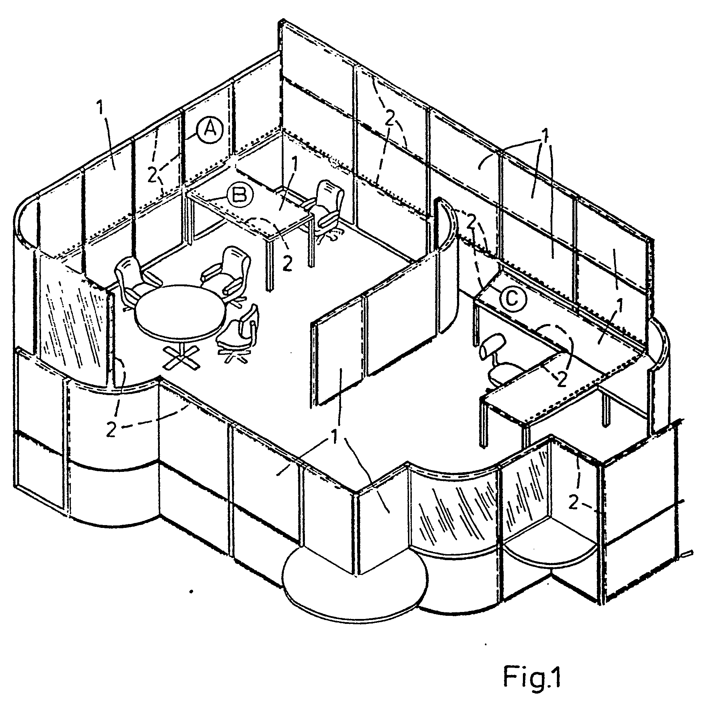

Fig. 1 zeigt einen durch die erfindungsgemässen Wandungen 1 zusammengestellten Arbeitsplatz in einem Büro, wobei diese Wandungen 1 zu Trennwänden aneinandergereiht und als Arbeitstische vorgesehen sind. Die Zusammenstellung dieser Wandungen 1 lässt sich beliebig durchführen und jederzeit verändern.

In diesem Arbeitsplatz ist z. B. mit «A» ein Stromabnahmepunkt an einer Stromverteilerschiene 2 für eine Leuchte, mit «B» ein Stromabnahmepunkt für ein Telefon und mit «C» ein Stromabnahmepunkt für eine Schreibmaschine dargestellt.

In die Stromverteilerschiene 2 sind elektriche Leiter für die Abnahme von Strom mit Netzspannung für Leuchten, Schreibmaschinen, elektrische Geräte, Werkzeuge und vieles mehr und auch Leiter für den Telefon- und Fernschreibanschluss eingegliedert, so dass von einer Stromverteilerschiene 2 die verschiedensten Abnahmen erfolgen können.

In Fig. 1 sind z. B. in strich-punktierten Linien Stromverteilerschienen 2 zur Abnahme von Netzstrom und in strich-punktierten und punktierten Linien Stromverteilerschienen 2 zur Abnahme von Netzstrom und für den Telefon- und Fernschreibanschluss dargestellt.

Die Grösse der Wandung 1 ist beliebig ausführbar. Auch lässt sich die Wandung in der Grundform quadratisch, eckig oder poligonal ausbilden und in sich eben oder gewölbt ausführen.

## Patentansprüche

1. Bewegliche Wandung in Form einer Trennwand, eines Trennwandelementes, einer Arbeits- bzw. Tischplatte, eines Gestelles, wie Tischgestelles, Regales, Schrankes od. dgl., dadurch gekennzeichnet, dass in die Wandung (1) an mindestens einer Kante (1a) und/oder Fläche (1b) eine berührungssicher ausgeführte Stromverteilerschiene (2) für den Anschluss von Stromabnehmern (3) integriert ist.

2. Bewegliche Wandung nach Anspruch 1, dadurch gekennzeichnet, dass die Stromverteilerschiene (2) mit ihrer Zugangsseite für den Stromabnehmer (3) bündig zur Kante (1a) bzw. Fläche (1b), vorzugsweise gegenüber dieser Kante (1a) bzw. Fläche (1b) zurückliegend in der Wandung (1) angeordnet ist.

3. Bewegliche Wandung nach Anspruch 1, dadurch gekennzeichnet, dass die Stromverteilerschiene (2) auf der Kante (1a) und/oder der Fläche (1b) der Wandung (1) festgelegt ist.

4. Bewegliche Wandung nach den Ansprüchen 1 bis 3, dadurch gekennzeichnet, dass mindestens die Zugangsseite der Stromverteilerschiene (2) von einer lösbar an der Stromverteilerschiene (2) und/oder der Wandung (1) gehaltenen Abdeckung (4), wie Leiste, Profil od. dgl. überdeckt ist.

5. Bewegliche Wandung nach den Ansprüchen 1 bis 4, dadurch gekennzeichnet, dass sich die Stromverteilerschiene (2) über die gesamte Länge der Kante (1a) bzw. Fläche (1b) der Wandung (1) erstreckt.

6. Bewegliche Wandung nach den Ansprüchen 1 bis 5, dadurch gekennzeichnet, dass die Stromverteilerschiene (2) in der Kante (1a) und/oder der Fläche (1b) der Wandung (1) rahmenartig umlaufend angeordnet ist.

7. Bewegliche Wandung nach den Ansprüchen 1, 2, 3, 4 und 5, dadurch gekennzeichnet, dass die Stromverteilerschiene (2) im Eckbereich zwischen Kante (1a) und Fläche (1b) der Wandung (1) eingelassen angeordnet ist.

8. Bewegliche Wandung nach den Ansprüchen 1 bis 7, dadurch gekennzeichnet, dass die Wandung (1) mit einem Anschluss (5) für Netzstrom und/oder einem elektrischen Steckverbinder (6) in lösbarer Verbindung steht.

9. Bewegliche Wandung nach den Ansprüchen 1 bis 8, dadurch gekennzeichnet, dass dieselbe in sich eben oder gewölbt ausgebildet ist und vorzugsweise eine eckige Grundform hat.

## Claims

1. Mobile wall in the form of a partition wall, a partition wall element, a work or table surface, a frame such as a table frame, shelving, cupboard or the like, characterized by the fact that an insulated power distribution bus bar is integrated the wall (1) at at least one edge (1a) and/or surface (1b) for the connection of adapters.

2. Mobile wall according to claim 1, characterized by the fact that the power distribution bus bar (2) is located with the access side for the adapter (3) flush to the edge (1a) or the surface (1b), preferably opposite to this edge (1a) or surface (1b) inset in the wall (1).

3. Mobile wall according to claim 1, characterized by the fact that the power distribution bus bar (2) is fixed on the edge (1a) and/or the surface (1b) of the wall (1).

4. Mobile wall according to claims 1 thru 3, characterized by the fact that at least the access side of the power distribution bus bar (2) is non-permanently covered by insulation (4) such as a panel, profile or something similar at the power distribution bus bar (2) or the wall (1).

5. Mobile wall according to. claim 1 thru 4, characterized by the fact that the power distribution bus bar (2) stretches the entire length of the edge (1a) or surface (1b) of the wall.

6. Mobile wall according to claims 1 thru 6, characterized by the fact that the power distribution bus bar (2) is located in a frame-type manner all round in the edge (1a) and/or the surface (1b) of the wall (1).

7. Mobile wall according to claims 1, 2, 3, 4 and 5, characterized by the fact that the power distribution bus bar (2) is located in the corner area between the edge (1a) and the surface (1b) of the wall (1).

8. Mobile wall according to claims 1 thru 7, characterized by the fact that the wall (1) has a non-permanent connection (5) to the mains and/or an electrical plug (6).

9. Mobile wall according to claims 1 thru 8, characterized by the fact that it has a plane or convex shape, and preferably a square basic shape.

## Revendications

1. Panneau mobile sous forme d'une cloison de séparation, d'un élément mural de séparation, d'une plaque de table, de travail, d'un bâti, comme bâti de table, étagère, armoire ou analogues, caractérisé par le fait qu'une barre de distribution 2 de courant protégée contre les contacts accidentels est intégrée, dans le panneau 1, à au moins un bord (1a) et/ou une surface (1b) en vue du raccordement de dispositifs de prise de courant (3).

2. Panneau mobile selon spécification 1, caractérisé par le fait que la barre de distribution de courant (2) est disposée dans le panneau (1), son côté d'accès pour prise de courant (3) étant à niveau avec le bord (1a) ou respect. La surface (1b), de préférence en retrait par rapport à ce bord (1a) respect. cette surface (1b).

3. Panneau mobile selon spécification 1, caractérisé par le fait que la barre de distribution de courant (2) est fixée sur le bord (1a) et/ou sur la surface (1b) du panneau (1).

4. Panneau mobile selon les spécifications de 1 à 3, caractérisé par le fait que le côté d'accès au moins de la barre de distribution de courant (2) est pourvu d'un recouvrement (4) tel que plaque, profilé ou analogues, maintenu de façon amovible à la barre de distribution de courant (2) et/ou au panneau (1).

5. Panneau mobile selon les spécifications de 1 à 4, caractérisé par le fait que la barre de distribution de courant (2) s'étend sur toute la longueur du bord (1a) ou respectivement de la surface (1b) du panneau (1).

6. Panneau mobile selon les spécifications de 1 à 5, caractérisé par le fait que la barre de distribution de courant (2) est disposée dans le bord (1a) et/ou la surface (1b) du panneau (1) en continu en forme de cadre.

7. Panneau mobile selon les spécifications 1, 2, 3, 4 et 5, caractérisé par le fait que la barre de distribution de courant (2) est disposée encastrée dans le secteur angulaire entre bord (1a) et surface (1b) du panneau (1).

8. Panneau mobile selon les spécifications de 1 à 7, caractérisé par le fait que le panneau (1) est relié amoviblement à un raccord (5) pour courant de réseau et/ou un reccord électrique enfichable (6).

9. Panneau mobile selon les spécifications de 1 à 8, caractérisé par le fait que celui-ci est, en lui-même, plat ou bombé et présente de préférence une forme fondamentale angulaire.

Fig.1

0174500

Fig.2

Fig.5

Fig.3

Fig.6

Fig.4

9